# EUROPÄISCHE PATENTANMELDUNG

(11) **EP 4 813 787 A1**
(43) Veröffentlichungstag der Anmeldung: **30.09.2026**
(21) Anmeldenummer: 25167154.1
(22) Anmeldetag: 28.03.2025
(51) Int. Cl.: B60W 50/04, B60W 30/09, B60W 30/095, B60W 30/14, B60W 30/18, B60W 50/00

(54) **ADAPTIVE GESCHWINDIGKEITSREGELUNG EINES KRAFTFAHRZEUGS**

(71) Anmelder: MAGNA Automotive Europe GmbH, 1120 Wien (AT)
(72) Erfinder: HOEFER, Christoph, 4483 Hargelsberg (AT); GROSSBICHLER, Martin, 4421 Aschbach/Steyr (AT); SACHSE, Manuel, 74538 Rosengarten (DE)
(74) Vertreter: Zangger, Bernd

(57) **Zusammenfassung**

Ein Verfahren zur adaptiven Regelung der Geschwindigkeit eines Kraftfahrzeugs (1) bei Annäherung des Kraftfahrzeugs (1) an eine ungeregelte Kreuzung (2), wobei das Kraftfahrzeug (1) Umgebungssensoren (3) umfasst zur Erfassung von Umgebungsdaten des Kraftfahrzeugs, insbesondere ADAS-Sensoren, wobei bei einer Annäherung des Kraftfahrzeugs (1) an die ungeregelte Kreuzung (2) Umgebungsdaten des Kraftfahrzeugs empfangen werden, dass auf Basis der Umgebungsdaten des Kraftfahrzeugs (1) und der aktuellen Position des Kraftfahrzeuges (1) eine geometrische Berechnung eines Sichtfeldes (4) der Umgebungssensoren (3) in Richtung zur ungeregelten Kreuzung (2) erfolgt, wobei abhängig vom Sichtfeld (4) und von einem vorgesehenen Zielpfad (5) des Kraftfahrzeugs (1) eine Berechnung eines Geschwindigkeitsplanes (vₚ) für das Kraftfahrzeug (1) auf dem vorgesehenen Zielpfad (5) erfolgt, wobei die Geschwindigkeit (v) des Kraftfahrzeugs (1) entsprechend des Geschwindigkeitsplanes (vₚ) geregelt wird.

## Beschreibung

### Gebiet der Erfindung

Die vorliegende Erfindung betrifft ein Verfahren zur adaptiven Regelung der Geschwindigkeit (Adaptive Cruise Control, ACC) eines Kraftfahrzeugs bei Annäherung des Kraftfahrzeugs an eine ungeregelte Kreuzung.

### Stand der Technik

Es ist bekannt, dass moderne Kraftfahrzeuge eine ADAS-Personalisierung aufweisen können. Bestehende Fahrerassistenzsysteme (Advanced Driver Assistance Systems, ADAS) bieten eine Reihe von vordefinierten Fahrmodi, die der Fahrer auswählen und manuell anpassen kann. Dies ermöglicht dem Fahrer einen gewissen Einfluss auf das Verhalten und den Fahrmodus einer automatisierten Fahrfunktionen.

Bekannt sind auch kontextabhängige ADAS-Systeme: Moderne ADAS-Systeme berücksichtigen verschiedene Fahrkontexte. Sie reagieren zum Beispiel auf vorausfahrende Fahrzeuge, berücksichtigen bevorstehende Kurven und interpretieren Lenkradeingaben, um die Geschwindigkeit bei Funktionen wie der adaptiven Geschwindigkeitsregelung (ACC) anzupassen.

Auch eine kurvenadaptive Längsregelung kann in modernen Fahrzeugen eingesetzt werden. Moderne ADAS für die Längsregelung, wie ACC, passen sich an Kurven an, indem sie auf eine angemessene Geschwindigkeit abbremsen. Diese Anpassung basiert in der Regel auf Kurvendaten, die von fahrzeuginternen Sensoren, insbesondere von Kameras, gewonnen werden, und kann auch Karteninformationen nutzen, die von elektronischen Horizonten auf der Grundlage von Standard- oder hochauflösenden GPS-Karten bereitgestellt werden.

Moderne ADAS Systeme können auch die Sicherheit an Kreuzungen verbessern: Je nach Sensorkonfiguration erhöhen ACC und die damit verbundenen Notfallfunktionen die Sicherheit an Kreuzungen, indem sie entgegenkommende und seitlich herannahende Fahrzeuge erkennen. Diese Systeme können den Fahrer vor möglichen Kollisionen warnen und in einigen Fällen eine Notbremsung einleiten, um einen Zusammenstoß zu verhindern. Solche Kollisionsvermeidungssysteme sind besonders an ungeregelten Kreuzungen von Vorteil.

Moderne ADAS Systeme weisen jedoch auch einige Nachteile auf, beispielsweise bezogen auf die Sensorabhängigkeit und damit verbundene Kosten: Die Leistung bestehender adaptiver Geschwindigkeitsregelungssysteme (ACC) und Kollisionsvermeidungssysteme hängt stark von der verfügbaren Sensorausstattung und der Sichtweite der Sensoren an Kreuzungen ab. Um die Leistung für eine zuverlässigere Erkennung herannahender Fahrzeuge (entgegenkommende Fahrzeuge, Fahrzeuge von links oder rechts) zu verbessern, müssten mehr und hochwertigere Sensoren eingebaut werden, was die Kosten erhöhen würde. Außerdem wären fortschrittlichere Erkennungsalgorithmen erforderlich, um Situationen genauer zu erkennen und Fehlalarme zu vermeiden, die zu unnötigen Notbremsungen führen können.

Selbst die fortschrittlichsten Sensoren können eingeschränkte Sichtverhältnisse an Kreuzungen nicht überwinden, wie sie beispielsweise durch Gebäude, andere Fahrzeuge oder sonstige Hindernisse verursacht werden. Solche Hindernisse können die Erkennung von entgegenkommenden Fahrzeugen, insbesondere seitlich von links oder rechts kommenden Fahrzeugen, verhindern.

### Zusammenfassung der Erfindung

Es ist eine Aufgabe der Erfindung, ein Verfahren zur adaptiven Regelung der Geschwindigkeit eines Kraftfahrzeugs bei Annäherung des Kraftfahrzeugs an eine ungeregelte Kreuzung anzugeben, das Kollisionen im Kreuzungsbereich zuverlässig vermeiden kann, eine zügige Fortbewegung des Kraftfahrzeuges ermöglicht und dabei zu einer kostengünstigen Herstellung des Kraftfahrzeuges beiträgt.

Die Lösung der Aufgabe erfolgt durch ein Verfahren zur adaptiven Regelung der Geschwindigkeit eines Kraftfahrzeugs bei Annäherung des Kraftfahrzeugs an eine ungeregelte Kreuzung, wobei das Kraftfahrzeug Umgebungssensoren umfasst zur Erfassung von Umgebungsdaten des Kraftfahrzeugs, insbesondere ADAS-Sensoren, wobei bei einer Annäherung des Kraftfahrzeugs an eine ungeregelte Kreuzung Umgebungsdaten des Kraftfahrzeugs empfangen werden, dass auf Basis der Umgebungsdaten des Kraftfahrzeugs und der aktuellen Position des Kraftfahrzeuges eine geometrische Berechnung eines Sichtfeldes der Umgebungssensoren in Richtung zur ungeregelten Kreuzung erfolgt, wobei abhängig vom Sichtfeld und von einem vorgesehenen Zielpfad des Kraftfahrzeugs eine Berechnung eines Geschwindigkeitsplanes für das Kraftfahrzeug auf dem vorgesehenen Zielpfad erfolgt, wobei die Geschwindigkeit des Kraftfahrzeugs entsprechend des Geschwindigkeitsplanes geregelt wird.

Erfindungsgemäß wird in einem Kraftfahrzeug bei Annäherung an eine ungeregelte Kreuzung, bei welcher somit nicht abhängig von einem Ampelsignal ohnehin vor dem Einfahren in einen Kollisions- oder Gefahrenbereich angehalten werden muss, die Geschwindigkeit des Kraftfahrzeuges abhängig vom Sichtfeld der Sensoren des Kraftfahrzeugs angepasst, insbesondere reduziert. Das Sichtfeld der Umgebungssensoren wird geometrisch bestimmt, indem die von den Umgebungssensoren gelieferten Umgebungsdaten und insbesondere darin erkennbare Hindernisse für das Sichtfeld berücksichtigt werden, sowie die Position des Kraftfahrzeuges relativ zu diesen Hindernissen. Die vorgesehene Geschwindigkeit auf dem geplanten Weg des Kraftfahrzeuges in Richtung eines Zielpfades - der die Einfahrt in die ungeregelte Kreuzung und die Ausfahrt aus der Kreuzung umfassen kann - wird in Abhängigkeit vom geometrisch bestimmten Sichtfeld der Sensoren angepasst.

Eine "ungeregelte Kreuzung" ist eine Kreuzung, auf welcher der Verkehr weder durch Lichtzeichen, insbesondere Ampeln, noch durch Armzeichen geregelt wird. Bei ungeregelten Kreuzungen unterscheidet man gleichrangige und ungleichrangige. Kreuzungen, bei denen den Vorrang betreffende Verkehrszeichen angebracht sind, gelten als ungleichrangig. Das erfindungsgemäße Verfahren bezieht sich auf gleichrangige und ungleichrangige ungeregelte Kreuzungen.

Gegenwärtig werden Kreuzungen die ungeregelt sind in den bestehenden Geschwindigkeitsplanungsprozessen für längsgerichtete Assistenzsysteme wie ACC nicht angemessen berücksichtigt. An ungeregelten Kreuzungen verlangsamen menschliche Fahrer in der Regel ihre Geschwindigkeit, um die Anwesenheit kreuzender Fahrzeuge zu beurteilen. Auf der Grundlage dieser Einschätzung entscheidet der Fahrer, ob er weiter abbremst, möglicherweise bis zum Stillstand, oder ob er beschleunigt und in die Kreuzung einfährt. Im Gegensatz zu Kreuzungen, die durch Stoppschilder geregelt sind, ist ein vollständiger Stillstand am Einfahrtspunkt der ungeregelten Kreuzung nicht zwingend erforderlich.

Dieses Fahrerverhalten, nämlich die Wahl einer geeigneten Einfahrgeschwindigkeit in eine Kreuzung auf Basis der Sichtverhältnisse an der Kreuzung, wird in einem erfindungsgemäßen Verfahren nachgebildet. Die Sichtweite wird zumindest zum Teil durch die geometrischen Eigenschaften der Kreuzung bestimmt, wie zum Beispiel Straßenbreite, Kreuzungswinkel, statische Hindernisse für die Sicht, sowie durch Informationen, die zum Beispiel aus GPS-Karten und damit verbundenen elektronischen Horizontkonzepten oder fahrzeuginternen Sensoren wie Kamera und Radar gewonnen werden können.

Erfindungsgemäß wird eine geeignete Geschwindigkeit für die Einfahrt in eine Kreuzung, insbesondere die Anfahrt an einen so genannten "Haltepunkt", bestimmt, wobei vorzugsweise auch der ungünstige Fall berücksichtigt wird, dass Sensorinformationen nicht verfügbar sind, solange das Kraftfahrzeug weit von der Kreuzung entfernt ist.

Hierdurch kann es erfindungsgemäß zu einer Berücksichtigung der Sichtweite in einer Geschwindigkeitsregelung (ACC) eines Kraftfahrzeuges kommen. Das ACC-System kann systematisch die Auswirkungen der Sichtweite bei der Geschwindigkeitsanpassung berücksichtigen. Das natürliche menschliche Fahrverhalten, bei der Annäherung an eine ungeregelte Kreuzung mit eingeschränkter Sichtweite langsamer zu fahren, wird in einem erfindungsgemäßem Geschwindigkeitsassistenzsystem nachgebildet. Eine Verlangsamungsphase an einer ungeregelten Kreuzung ist auf die spezifischen Eigenschaften der Kreuzung, wie die Sichtweite, zugeschnitten.

Die Annäherung an eine Kreuzung ist von den spezifischen Sichtverhältnissen im konkreten Einzelfall abhängig. Es kommt zu einem verbesserten adaptiven Verhalten bei der Annäherung an Kreuzungen mit eingeschränkter Sichtweite.

Die erfindungsgemäße Lösung stellt einen neuartigen Ansatz dar, um eine sichere und menschenähnliche Geschwindigkeitskontrolle in Längsassistenzsystemen, wie zum Beispiel der adaptiven Geschwindigkeitsregelung (ACC) für Kraftfahrzeuge an ungeregelten Kreuzungen zu erreichen, indem vorzugsweise GPS-Kartendaten und fahrzeuginterne Sensoren verwendet werden, um die Kreuzungsgeometrie und geplante Manöver abzuleiten, geometrische Sichtbereiche unter Berücksichtigung der Kreuzungsgeometrie und möglicher Hindernisse zu berechnen, und eine vorausschauende Verlangsamung auf eine angemessene Geschwindigkeit, bis ein bestimmter "Entscheidungspunkt" erreicht ist, an dem der Sichtbereich für die Sensoren ausreicht, um andere Fahrzeuge zur Kollisionsvermeidung zu erkennen, zu erreichen. Dadurch kann das Ego-Fahrzeug seine Geschwindigkeit in die Kreuzung hinein beibehalten, sogar beschleunigen, oder weniger reduzieren und ein unnötiges konservatives Anhalten vermeiden, ohne den Querverkehr zu beeinträchtigen. Die Fahrzeit des Ego-Fahrzeugs und der Energieverbrauch kann verringert werden, die Sicherheit durch eine angemessene Geschwindigkeitsauswahl erhöht und ein menschenähnliches Fahrverhalten realisiert werden.

Es können hierdurch unter anderem folgende Vorteile erreicht werden:
- Erhöhte Sicherheit: Durch die Berechnung des Sichtfelds und der Planungsgeschwindigkeiten, um sicherzustellen, dass das Fahrzeug immer sicher innerhalb des Sichtbereichs anhalten kann, verringert das System das Risiko von Kollisionen mit nicht sichtbaren Objekten oder Fahrzeugen.
- Verbesserte Effizienz: Die Fähigkeit, Entscheidungspunkte zu identifizieren, an denen das Fahrzeug nicht mehr abbremsen und sich auf die Sensoren zur Kollisionsvermeidung verlassen kann, ermöglicht eine reibungslosere und effizientere Navigation durch Kreuzungen, wodurch unnötige Stopps und Verzögerungen vermieden werden.
- Menschenähnliches Verhalten: Das System ahmt das menschliche Fahrverhalten nach, indem es die Geschwindigkeit des Fahrzeugs an die Sichtverhältnisse und die Kreuzungsgeometrie anpasst, was zu einem natürlicheren und vorhersehbareren Fahrerlebnis führt.
- Erhöhter Komfort: Die Geschwindigkeitsregelung im geschlossenen Regelkreis und die Planung bieten Funktionen für die adaptive Geschwindigkeitsregelung (ACC), die den Fahrkomfort an ungeregelten Kreuzungen erhöhen.
- Vielseitigkeit: Die Lösung kann auf verschiedene Kreuzungstypen und -szenarien angewendet werden, einschließlich Rechtsabbiegemanövern an T-Kreuzungen mit Vorfahrtsschildern, was sie zu einem vielseitigen Ansatz für unterschiedliche Fahrbedingungen macht.
- Vorausschauende Planung: Durch vorausschauende Planung und Worst-Case-Annahmen stellt das System sicher, dass das Fahrzeug auf unerwartete Situationen vorbereitet ist, und erhöht so die allgemeine Verkehrssicherheit, ohne auf teure Sensoren angewiesen zu sein.
- Integration mit bestehenden Technologien: Das System nutzt bevorzugt Daten von GPS-Karten, elektronischen Horizonten, Cloud-basierten APIs und/oder fahrzeuginternen Sensoren und ermöglicht so eine nahtlose Integration mit bestehenden Navigations- und Sensortechnologien.
- Kürzere Reisezeit: Durch die Vermeidung unnötiger Stopps und die Optimierung der Fahrzeuggeschwindigkeit auf der Grundlage der Echtzeitbedingungen kann die Lösung dazu beitragen, die Gesamtreisezeit zu verkürzen und den Verkehrsfluss zu verbessern.

Weiterbildungen der Erfindung sind in den abhängigen Ansprüchen, der Beschreibung sowie den beigefügten Zeichnungen angegeben.

Bevorzugt werden zusätzlich zu den Umgebungsdaten des Kraftfahrzeugs die mittels Umgebungssensoren erfasst werden, Daten aus GPS-Systemen und/oder Daten aus elektronischen Horizont-Konzepten genutzt, zur Berechnung des Geschwindigkeitsplanes für das Kraftfahrzeug auf dem vorgesehenen Zielpfad.

Vorzugsweise wird ein Zielbezugspunkt auf dem vorgesehenen Zielpfad bestimmt, so dass am Zielbezugspunkt das Kraftfahrzeug die Annäherung an die ungeregelte Kreuzung beendet hat und eine Standardgeschwindigkeit für das Befahren der Zielfahrbahn einnehmen kann, wobei eine benötigte Zeit berechnet wird, die das Kraftfahrzeug bei einer Bewegung entsprechend des Geschwindigkeitsplanes bis zum Erreichen des Zielbezugspunkts benötigt. Der Zielbezugspunkt ist ein Punkt auf dem Zielpfad, an dem das Kraftfahrzeug den gesamten Vorgang der Annäherung an die ungeregelte Kreuzung beendet hat, das heißt dass das gesamte Manöver des Befahrens der Kreuzung abgeschlossen ist und das Kraftfahrzeug mit einer für die Zielfahrbahn an dieser Stelle üblichen Geschwindigkeit weiter fahren kann, ohne Reduktion der Geschwindigkeit aufgrund des gesamten Einfahrmanövers in die neue Fahrbahn.

Bevorzugt wird eine verfügbare Zeit berechnet, die ein Fremdfahrzeug, welches im Sichtfeld der Umgebungssensoren detektiert wurde oder welches außerhalb des Sichtfeldes der Umgebungssensoren liegt, bei einer Bewegung mit einer wahrscheinlichen Geschwindigkeit, also mit einer für den betreffenden Straßenabschnitt und/oder eventuell abhängig von aktuellen Umgebungsbedingungen wie Wetterbedingungen wahrscheinlichen Geschwindigkeit, bis zum Erreichen des Zielbezugspunkts benötigt.

Vorzugsweise wird in einem solchen Verfahren geprüft, ob die benötigte Zeit kleiner ist, als die verfügbare Zeit, wobei, falls dies nicht der Fall ist, abhängig vom Sichtfeld und von dem vorgesehenen Zielpfad des Kraftfahrzeugs eine erneute Berechnung eines Geschwindigkeitsplanes für das Kraftfahrzeug auf dem vorgesehenen Zielpfad mit einer reduzierten Geschwindigkeit erfolgt. Der Geschwindigkeitsplan wird somit dann durch eine Reduktion der Geschwindigkeit angepasst, wenn ein Erreichen des Zielbezugspunkts, bevorzugt im Bereich der Ausfahrt aus der Kreuzung, vom Kraftfahrzeug nicht schneller erreicht wird, als von einem möglichen Fremdfahrzeug.

Bevorzugt erfolgt eine Berechnung eines Kollisionspunktes, wobei der Kollisionspunkt eine Position des Kraftfahrzeuges auf dem vorgesehenen Zielpfad des Kraftfahrzeugs beschreibt, bei der das Kraftfahrzeug in einen Gefahrenbereich einer möglichen Kollision mit einem kreuzenden Fremdfahrzeug an der Kreuzung eintritt. Insbesondere kann der Kollisionspunkt eine Position des Kraftfahrzeuges beschreiben, bei der die Kontur, also der äußere Umriss des Kraftfahrzeuges, in den Gefahrenbereich eintritt, insbesondere eine Verbindungslinie einer kreuzenden Straße schneidet. Der Gefahrenbereich kann bevorzugt so festgelegt sein, dass er an einer gedachten Verbindungslinie des nächstliegenden Straßenrandes an der Kreuzung die eigene Fahrbahn kreuzender Fahrbahnen beginnt. Der Kollisionspunkt, also der Punkt einer möglichen Kollision mit einem kreuzenden Fahrzeug auf dem Zielpfad, liegt somit nicht nur auf dem Zielpfad, sondern bevorzugt auch auf dieser Verbindungslinie der nächstliegenden äußeren Fahrbahnbegrenzungen der kreuzenden Fahrbahnen. Diese Verbindungslinie kann auch als Haltelinie bezeichnet werden und ist bevorzugt die Linie, auf der der Haltepunkt liegt, an dem ein Kraftfahrzeug üblicherweise anhaltet, wenn die Einfahrt in die Zielfahrbahn nicht möglich ist.

Die reduzierte Geschwindigkeit des neuen, reduzierten Geschwindigkeitsplanes kann vorsehen, dass eine Minimalgeschwindigkeit am Kollisionspunkt erreicht wird, beispielsweise ein Stillstand am Kollisionspunkt, soweit möglich jedoch eine Geschwindigkeit größer Null am Kollisionspunkt, bevorzugt kleiner als 5 km/h.

Vorzugsweise wird geprüft, ob die benötigte Zeit kleiner ist als die verfügbare Zeit, wobei falls dies der Fall ist, die Geschwindigkeit des Kraftfahrzeugs entsprechend einer nicht durch ein Kollisionsrisiko reduzierten Standardgeschwindigkeit für das Befahren der Kreuzung geregelt wird. Eine Reduktion der Geschwindigkeit auf Grund einer möglichen Kollision mit einem Fremdfahrzeug beim Einfahren in die Kreuzung muss dann nicht erfolgen, so dass eine unabhängig von einer Kollisionsgefahr geeignete Standardgeschwindigkeit für die Einfahrt in die Kreuzung gewählt werden kann.

Vorzugsweise erfolgt, abhängig vom Sichtfeld und von dem vorgesehenen Zielpfad des Kraftfahrzeugs, die Berechnung des Geschwindigkeitsplanes für das Kraftfahrzeug auf dem vorgesehenen Zielpfad mittels eines numerischen Optimierungsverfahrens, wobei das Optimierungsverfahren eine Kostenfunktion für eine Effizienz- und/oder Zeitoptimierung verwendet. Zusätzlich zum Sichtfeld spielt somit eine Zeitoptimierung, somit rasches Fortbewegen des Kraftfahrzeuges, und/oder eine Effizienzoptimierung, beispielsweise Energieoptimierung, eine Rolle bei der Bestimmung des Geschwindigkeitsplanes zum Anfahren der ungeregelten Kreuzung.

Ein erfindungsgemäßes Kraftfahrzeug umfassend ein im Kraftfahrzeug verbautes Steuergerät, das dazu eingerichtet ist, ein Verfahren wie zuvor beschrieben auszuführen. Durch das Steuergerät kann die Geschwindigkeit des Kraftfahrzeugs, zumindest in Längsrichtung, beim Einfahren in eine Kreuzung geregelt werden.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer ungeregelten Kreuzung.
- Fig. 2: ist eine schematische Darstellung einer ungeregelten Kreuzung und stellt ein Szenario eines rechtsabbiegenden Kraftfahrzeugs an einer vorfahrtsgeregelten T-Kreuzung mit verschiedenen Bezugsgrößen für ein erfindungsgemäßes Verfahren dar.
- Fig. 3: ist eine schematische Darstellung der Berechnung eines Sichtfeldes 4 in zwei Varianten (linke und rechte Abbildung der Fig. 3).
- Fig. 4: ist eine schematische Darstellung des Szenarios eines rechtsabbiegenden Kraftfahrzeugs an einer vorfahrtsgeregelten T-Kreuzung gemäß Fig. 2, mit weiteren Bezugsgrößen für ein erfindungsgemäßes Verfahren dar.
- Fig. 5: ist eine schematische Darstellung von berechneten Signalen einer geometrischen Eigenschaftsberechnung bei Annäherung an eine T-Kreuzung in einem erfindungsgemäßen Verfahren.
- Fig. 6: ist eine schematische Darstellung einer Situation in der der Entscheidungspunkt erreicht ist und eine freie Geschwindigkeitsplanung erfolgen kann, am Ende eines erfindungsgemäßen Verfahrens.
- Fig. 7: stellt ein Gesamtblockdiagramm für ein erfindungsgemäßes Verfahren dar.
- Fig. 8: ist eine schematische Darstellung des Ergebnisses der Anwendung eines erfindungsgemäßen Verfahrens auf eine 90-Grad-T-Kreuzung. Dargestellt sind Streifen mit den Profilen von Geschwindigkeit v, Zeit t, Krümmung c, Radius r und Erlaubnis e zum Einfahren in die Kreuzung über die Strecke.

### Detaillierte Beschreibung der Erfindung

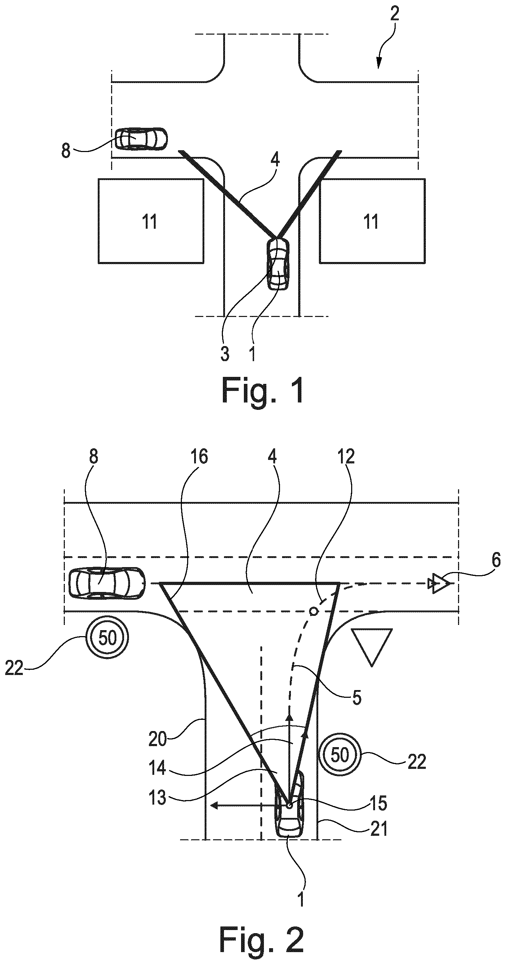

In Fig. 1 ist eine ungeregelte Kreuzung dargestellt, wie sie in einem erfindungsgemäßen Verfahren angenähert und befahren werden soll.

Selbst die fortschrittlichsten Umgebungssensoren 3 können eingeschränkte Sichtverhältnisse an Kreuzungen 2 nicht überwinden, wie sie beispielsweise durch Gebäude, andere Fahrzeuge oder sonstige Hindernisse 11 verursacht werden. Wie in Fig. 1 dargestellt, können diese Hindernisse 11 die Erkennung von kreuzenden Fremdfahrzeugen 8 von links oder rechts verhindern. Erfindungsgemäß kann nun die Geschwindigkeit v des sich der Kreuzung 2 annähernden Kraftfahrzeugs 1 an das Sichtfeld 4 angepasst werden, insbesondere an die Längs- und/oder Quersichtweite, sodass Kollisionsvermeidungssysteme optimiert werden.

Fig. 2 zeigt ein Szenario eines Rechtsabbiegemanövers, nämlich eines rechtsabbiegenden Kraftfahrzeugs 1 an einer T-Kreuzung mit Vorfahrtszeichen, die mit einem erfindungsgemäßen Verfahren angenähert werden kann. Dargestellt ist das Ego-Fahrzeug, also das eigene Kraftfahrzeug 1, der beabsichtigte und bekannte eigene Zielpfad 5 für das geplante Fahrszenario, also das Rechtsabbiegen, und den angenommenen Weg des kreuzenden Fremdfahrzeugs 8, das sich in dieser Situation noch unerkennbar für die Umgebungssensoren 3, da außerhalb deren Sichtfeld 4, von links auf der Hauptstraße nähert. Das Kraftfahrzeug 1 fährt auf einer Straße mit linker Straßenbegrenzung 20 und rechter Straßenbegrenzung 21. Geschwindigkeitsbegrenzungen 22 regeln die erlaubte Geschwindigkeit an der von Fahrzeug 1 befahrenen Straße, sowie an der kreuzenden Straße, die der eigenen Straße gegenüber Vorrang hat.

Ein Haltepunkt 12 ist in Fig. 2 als die Position dargestellt, an der das Ego-Fahrzeug 1 anhalten muss, um einem kreuzenden Fahrzeug 8 das Überqueren der Kreuzung 2 zu ermöglichen. Bei einer konservativen Betrachtung bestimmen der linke und der rechte Fahrbahnrand das Sichtfeld 4, was eine Worst-Case-Annahme ist. Wie ersichtlich, können für jeden Punkt entlang des Zielpfads 5 des Ego-Fahrzeugs 1 die Grenzen des Sichtfelds 4 durch Berechnung von Tangenten 16 an die Kurven, die vom linken und rechten Straßenrand im Bereich der Kreuzung 2 bestimmt werden, wobei die Tangenten 16 durch die aktuelle Position des eigenen Kraftfahrzeugs 1, vorzugsweise des Umgebungssensors 3 des Kraftfahrzeugs 1 oder eines Schwerpunktes 15 des Kraftfahrzeugs 1, führen. Daraus lässt sich der Erfassungswinkel für das linke und rechte Sichtfeld 4 (links und rechts von der Geraden nach vorne in Fahrtrichtung) berechnen. Das Einbiegen in die Kreuzung endet mit dem Erreichen des Zielbezugspunkts 6, der vom Algorithmus selbst bestimmt wird.

Die folgende detaillierte Beschreibung bezieht sich auf eine Rechtsabbiegesituation an einer T-Kreuzung, wie sie in Fig. 2 dargestellt ist, was eine Ausführungsform der Erfindung darstellt.

Datenerfassung an Kreuzungen: Wenn sich das Fahrzeug 1 einer Kreuzung 2 nähert, wird die Datenerfassung automatisch durch eine spezielle Logik gestartet. Aus GPS-Karten, elektronischen Horizonten, APIs zu cloudbasierten Karten und/oder fahrzeuginternen Sensoren, wie zum Beispiel Kamera und/oder Radar, werden die erforderlichen Daten für die bevorstehende Kreuzung 2 abgeleitet, vorzugsweise einschließlich: Straßenbreite und/oder Geschwindigkeitsbegrenzung und/oder Breite der Hauptverkehrsstraßen und/oder Geschwindigkeitsbegrenzung und/oder Kreuzungswinkel von Neben- zu Hauptverkehrsstraßen und/oder Radius im Übergang von einer Nebenstraße zu einer Hauptstraße.

Der Algorithmus berechnet ausgehend von der aktuellen Position des Kraftfahrzeugs 1 bevorzugt die folgenden Größen: Straßenbegrenzungen, den Zielpfad des Ego-Fahrzeugs 1, den Kurs des kreuzenden Fremdfahrzeugs 8, den Haltepunkt 12.

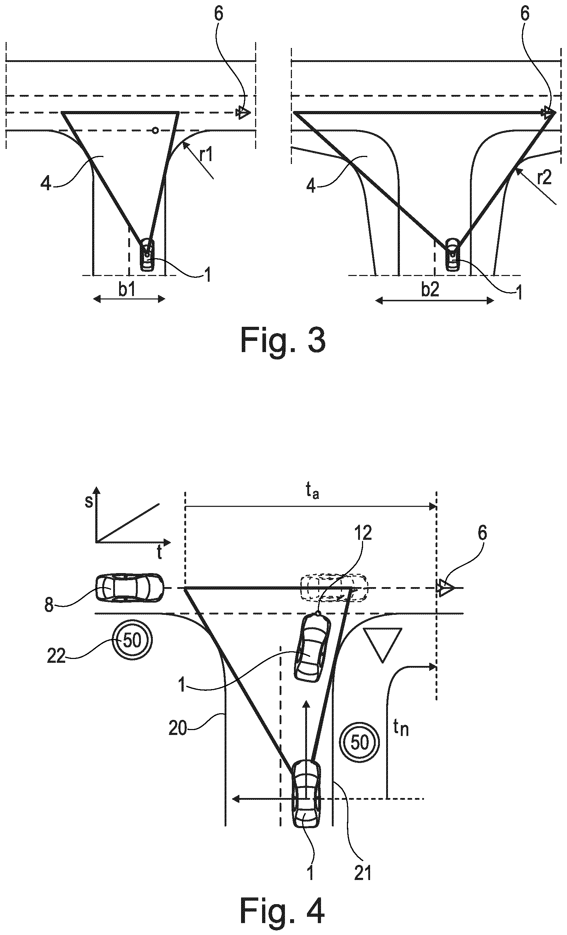

Anschließend erfolgt eine Berechnung der geometrischen Eigenschaften der aktuellen Situation. Das Sichtfeld 4 wird durch Berechnung der Erfassungswinkel 13, 14 auf der linken und rechten Seite des Fahrzeugs 1 bestimmt. Bevorzugt dient der Schwerpunkt 15 des Kraftfahrzeugs 1 als Basis für die Berechnung dieser Winkel. Je nach Fahrzeuglängsrichtung und linker oder rechter Straßenbegrenzung können die Tangenten 16 definiert werden. Mit Hilfe trigonometrischer Funktionen werden dann der oder die Erfassungswinkel, beispielsweise ein linker Erfassungswinkel 13 und ein rechter Erfassungswinkel 14, berechnet. Fig. 3 zeigt das berechnete Sichtfeld 4 für eine T-Kreuzung in Abhängigkeit von der angenommenen linken und rechten Straßenbegrenzung.

Fig. 3 stellt schematisch die Berechnung eines Sichtfeldes 4 in zwei Varianten (linke und rechte Abbildung der Fig. 3) dar. Fig. 3 zeigt die Auswirkung der gewählten Straßenbegrenzungen als Hindernisse 11 für die Umgebungssensoren 3 auf den resultierenden Erfassungswinkel 13, 14, beispielsweise links und rechts der Vorwärtsrichtung, dar.

Die Berechnungsvorschrift zur Bestimmung des Kollisionspunktes 9 berücksichtigt die Geometrie des Fahrzeugs 1. Dazu wird ein Begrenzungsrahmen (Bounding Box) erstellt, der sich über die Breite und Länge des Fahrzeugs 1 erstreckt und entsprechend seiner aktuellen Ausrichtung angepasst wird, wie in Fig. 4 dargestellt. Durch eine iterative Prüfung wird der Kollisionspunkt 9 als der Schwerpunkt definiert, an dem sich der Begrenzungsrahmen und die Haltelinie zum ersten Mal schneiden. Aufgrund dieser Definition wird der Kollisionspunkt 9 erreicht, bevor der zuvor genannte Haltepunkt 12 erreicht wird. Genauer gesagt, wenn der Schwerpunkt 15 des Kraftfahrzeugs 1 den Kollisionspunkt 9 erreicht, erreicht eine der Fahrzeugkanten den Haltepunkt 12.

Fig. 4 stellt schematisch diese Situation zur Berechnung von Kollisionspunkt 9, Zielbezugspunkt 6 und zur Berechnung der benötigten Zeit tₙ und der verfügbaren Zeit tₐ dar. Das Fremdfahrzeug 8 nähert sich mit angenommener konstanter Geschwindigkeit - bei Annahme des ungünstigsten Falls entspricht das der Geschwindigkeitsbegrenzung auf der Hauptstraße -, das eigene Fahrzeug (Ego-Fahrzeug), Kraftfahrzeug 1, nähert sich der Kreuzung 2 mit der durch die Geschwindigkeitsplanungsfunktion vₚ bestimmten Geschwindigkeit v.

Geschwindigkeitsgrenze für die Kollisionspunktberechnung: Falls die Sichtweite nicht ausreicht, wird das Kraftfahrzeug 1 in Richtung des Kollisionspunktes 9 abbremsen. Die konservative Zielgeschwindigkeit am Kollisionspunkt 9 ist auf 2 km/h festgelegt, kann aber für bestimmte Anwendungen kalibriert werden. Die Geschwindigkeit von 2 km/h ermöglicht ein allmähliches Einfahren in die Kreuzung 2 bei schlechten Sichtverhältnissen, bis der Erfassungswinkel 13, 14 eine ausreichende Sicht für die peripheren Sensoren 3 bietet, um eine angemessene Sichtlinie zu bestätigen. Nach dem Haltepunkt 12, an dem die Straße vollständig sichtbar ist, gilt die Geschwindigkeitsbegrenzung für die Hauptstraße.

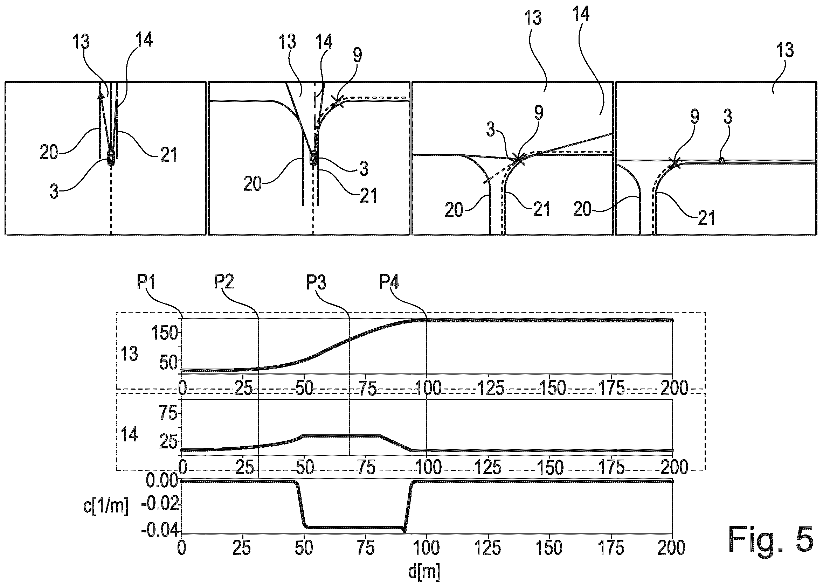

Beispiele für berechnete Signale einer geometrischen Eigenschaftsberechnung für eine T-Kreuzung sind in Fig. 5 dargestellt.

Fig. 5 zeigt eine geometrische Analyse einer 90-Grad-T-Kreuzung. Dargestellt ist die Entwicklung des konservativ berechneten Sichtfeldes 4 basierend auf der aktuellen Ego-Fahrzeugposition. Erfassungswinkel links 13 und rechts 14, die Fahrzeuglängsrichtung ist als gestrichelte Linie dargestellt, ein Kreuz markiert den Kollisionspunkt 9.

Es sind die folgenden Positionen bei Annäherung an die Kreuzung 2 dargestellt: Zielpfadposition 0m als P1, Zielpfadposition 30m als P2, Zielpfadposition 68m, Kollisionspunkt als P3 und Zielpfadposition 100m als P4.

Geschwindigkeitsplanung: Dieser Funktionsblock bewertet einen kontinuierlichen Geschwindigkeitsplan vₚ entlang des bevorstehenden Zielpfads 5 des Ego-Fahrzeugs 1 unter Berücksichtigung der folgenden Eingabedaten, die in einigen Ausführungsformen variieren können: Position des Fahrzeugs 1, elektronischer Horizont, insbesondere aufkommende Krümmung, Neigung und Vektoren der gesetzlichen Geschwindigkeitsbegrenzung, möglicherweise ADAS-Sensoren zur Verbesserung der Daten des elektronischen Horizonts, aktuelle Fahrzeugzustandssignale, wie Fahrzeuggeschwindigkeit und -beschleunigung.

In bevorzugten Ausführungsformen kann diese Funktion einen numerischen Optimierungsansatz enthalten, bei dem eine Kostenfunktion verwendet wird, die für die Effizienz- oder Zeitoptimierung auf der Grundlage gegebener Faktoren und Einschränkungen, die durch den Fahrer, das Fahrzeug und die Straße selbst auferlegt werden, zugeschnitten werden kann, indem zum Beispiel Steigung, Krümmung und gesetzliche Geschwindigkeitsbegrenzung berücksichtigt werden. Die Geschwindigkeitsbegrenzung berücksichtigt die Geschwindigkeitsbeschränkungen sowohl auf Neben- als auch auf Hauptstraßen.

Der spezifische Algorithmus kann beispielsweise ein fortschrittlicher Ansatz sein, wie er oben beschrieben wurde, oder auch ein einfacher, zum Beispiel ein rein auf Kinematik basierender Planer.

Beachten Sie, dass die Geschwindigkeitsplanung standardmäßig die vom elektronischen Horizont vorgegebene gesetzliche Geschwindigkeitsgrenze verwendet, aber eine Rückwärtsschleife "Geschwindigkeitsreduktion (Haltepunkt) einplanen" S7 könnte diese Eingabe möglicherweise ändern, um eine niedrige und/oder Null-Geschwindigkeit - die zuvor erwähnte Geschwindigkeitsgrenze für den Kollisionspunkt 9 - am Kollisionspunkt 9 zu erzwingen, siehe weitere Beschreibung dieser Funktionalität unten.

Die Zeitberechnung basiert auf den Ergebnissen der geometrischen Berechnungen und der aktuellen Geschwindigkeitsplanung.

Zielbezugspunktberechnung: Zunächst muss die Bestimmung des Zielbezugspunktes 6 für die Zeitberechnung anhand der zuvor geplanten Geschwindigkeit des Ego-Fahrzeugs 1 entlang der Ego-Zielbahn 5 erfolgen. Der Zielbezugspunkt 6 stellt das Ende des Abbiegemanövers dar, an dem das Ego-Fahrzeug 1 eine angemessene stationäre Geschwindigkeit erreicht, so dass es sich ohne Beeinträchtigung der anderen Fahrzeuge reibungslos in den Hauptverkehrsfluss einfügt. In einigen Ausführungsformen ist die technische Definition des Zielbezugspunkts 6 der Ort, an dem das Ego-Fahrzeug 1 die Zielgeschwindigkeit - die Höchstgeschwindigkeit auf der Hauptverkehrsstraße - erreicht. Bei kurvenreichen Straßen oder im Falle von Verkehr werden zusätzliche Bedingungen benötigt, um einen sinnvollen Zielbezugspunkt 6 zu bestimmen. Bei Kurven kann zum Beispiel die zulässige Höchstgeschwindigkeit auf der Hauptstraße nicht sicher erreicht werden, so dass eine andere Bedingung, zum Beispiel basierend auf der Beschleunigung des Ego-Fahrzeugs 1, verwendet werden kann. In diesem Fall könnte der Zielbezugspunkt 6 als der Punkt definiert werden, an dem die Beschleunigung des Ego-Fahrzeugs 1 nach Überschreiten des Haltepunkts 12 unter einen Schwellenwert sinkt, der anzeigt, dass eine stationäre Fahrsituation nach dem Beschleunigen auf der Hauptstraße erreicht ist. Die letztgenannte Option bietet Flexibilität bei der Festlegung eines Zielbezugspunkts 6, selbst auf kurvenreichen Stra-ßenabschnitten, auf denen die Zielgeschwindigkeit möglicherweise nie erreicht wird.

Berechnung der benötigten Zeit tₙ: Diese Funktion berechnet die Zeitdauer, die das Ego-Fahrzeug 1 benötigt, um das geplante Manöver mit der geplanten Geschwindigkeit entlang der Ego-Zielbahn 5 durchzuführen. Aus dem Verhältnis zwischen dem geplanten Ego-Geschwindigkeitsverlauf und dem Abstand des Ego-Fahrzeugs 1 zum zuvor berechneten Zielbezugspunkt 6 über der Ego-Zielbahn 5 kann die benötigte Zeit tₙ berechnet werden. Die Visualisierung der benötigten Zeit tₙ ist in Fig. 4 dargestellt.

In einigen Ausführungsformen kann der Zeitberechnung eine zusätzliche, kalibrierbare Sicherheitsspanne hinzugefügt werden. Insgesamt bestimmt die berechnete benötigte Zeit tₙ die Zeitspanne, die das Ego-Fahrzeug 1 benötigt, um die Kreuzung 2 zu durchfahren und sich reibungslos in den Hauptstraßenverkehr einzufügen, wenn man den aktuellen aktiven Geschwindigkeitsplan vₚ berücksichtigt.

Berechnung der verfügbaren Zeit tₐ: Die verfügbare Zeit tₐ wird berechnet als die Strecke eines potenziell querenden Fahrzeugs 8, die sich am Schnittpunkt der linken Hülllinie des Sichtfelds 4 und der Zielstrecke des querenden Fahrzeugs 8 befindet, geteilt durch die konstante Geschwindigkeit des querenden Fahrzeugs (siehe Fig. 4). Im ungünstigsten Fall wird angenommen, dass die konstante Geschwindigkeit der Höchstgeschwindigkeit auf der Hauptstraße entspricht.

Danach erfolgt eine Prüfung, ob die benötigte Zeit tₙ kleiner ist als die verfügbare Zeit tₐ: Zu Beginn ist das Sichtfeld 4 typischerweise klein, weil das Ego-Fahrzeug 1 noch weit von der Kreuzung 2 entfernt ist (siehe Fig. 4, linke Abbildung). Daher ist die Zeit tₙ, die das Ego-Fahrzeug 1 benötigt, um den Zielbezugspunkt 6 zu erreichen, typischerweise länger als die Zeit, die das potenziell kreuzende Fahrzeug auf der Hauptstraße benötigt (= verfügbare Zeit tₐ). Daher ist zu Beginn der Berechnung die Bedingung benötigte Zeit tₙ < verfügbare Zeit tₐ nicht erfüllt. Folglich wird durch den Block "Set Stopping Speed" eine Schleife zurück zur Geschwindigkeitsplanung durchgeführt, wodurch eine neue Geschwindigkeitsplanung vₚ ausgelöst wird, bei der die Geschwindigkeitsgrenze am Kollisionspunkt 9 auf die "Geschwindigkeitsgrenze für den Kollisionspunkt" (z. B. 2 km/h) gesetzt wird. Dieser konservative Geschwindigkeitsplan vₚ, der vorsieht, am Kollisionspunkt 9 anzuhalten (bzw. auf die " Geschwindigkeitsgrenze für den Kollisionspunkt" abzubremsen), wird vom Fahrzeug 1 weiter ausgeführt. In der nächsten Iteration, in der sich das Fahrzeug 1 ein Stück vorwärts bewegt hat und sich daher die Sichtweitenbedingungen geändert haben, wird der Prozess wiederholt, bis das Fahrzeug einen Punkt erreicht, an dem die Bedingung benötigte Zeit tₙ < verfügbare Zeit tₐ erfüllt ist, was bedeutet, dass der Entscheidungspunkt 17 erreicht ist.

Entscheidungspunkt 17 erreicht - Unbeschränkte Geschwindigkeitsplanung: Wenn die Bedingung benötigte Zeit tₙ < verfügbare Zeit tₐ erfüllt ist, ist der berechnete "uneingeschränkte" Geschwindigkeitsplan gültig, da der aktuelle Sichtbereich 4 ausreicht, um sicher weiterzufahren, ohne dass ein Anhalten am Kollisionspunkt 9 geplant werden muss. Es ist zu beachten, dass dieser "uneingeschränkte" Geschwindigkeitsplan vₚ das Anhalten am Kollisionspunkt 9 nicht beinhaltet und somit möglicherweise eine Beschleunigung erlaubt, um bei der Annäherung an die Kreuzung 2 eine höhere Geschwindigkeit v zu erreichen. Dies ist zulässig, da das ADAS des Ego-Fahrzeugs 1 aufgrund der ausreichenden Sichtweite weiterhin auf Sensoren für Kollisionsvermeidungsfunktionen zurückgreifen kann, um das Manöver sicher durchzuführen, und das Ego-Fahrzeug 1 in die Kreuzung 2 einbiegen kann.

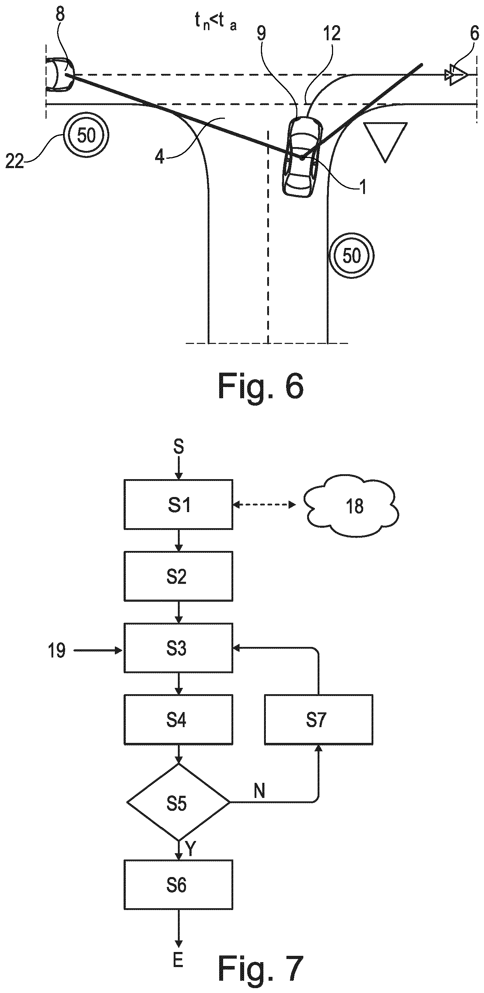

Fig. 6 zeigt eine Situation in der der Entscheidungspunkt 17 erreicht ist und eine freie Geschwindigkeitsplanung erfolgen kann: Zu diesem Zeitpunkt ist genügend Sichtweite bzw. Sichtfeld 4 vorhanden - in diesem Beispiel nach links -, so dass keine Notwendigkeit besteht, im Geschwindigkeitsplan vₚ konservativ die Geschwindigkeit v bis zum Stillstand zu verringern, sondern die Steuerung kann sich auf den ADAS-Sensor zur Kollisionsvermeidung verlassen. Unabhängig davon plant die adaptive Geschwindigkeitsregelung ACC eine freie Geschwindigkeit nur unter Berücksichtigung der zuvor angegebenen Eingaben an die Geschwindigkeitsplanungsfunktion.

Fig. 7 stellt ein Gesamtblockdiagramm für ein erfindungsgemäßes Verfahren dar.

Die Gesamtfunktionalität eines erfindungsgemäßen Verfahrens ist in Fig. 7 dargestellt. Am festgelegten Entscheidungspunkt 17 endet der Algorithmus und erlaubt dem Fahrzeug 1, die Geschwindigkeit v frei zu planen, ohne einen Stopp am Kollisionspunkt 9 zu erzwingen ("Optimal Velocity" ov). Im Vergleich dazu würde ein konservativer Ansatz ("Conventional Velocity" cv) immer einen Halt am Kollisionspunkt 9 vorsehen, was zu einem unnötigen Anstieg der Fahrzeit, des Verbrauchs und zu einem nicht menschenähnlichen Verhalten führen würde.

In der Fig. 7 sind dargestellt: der Start S, Kreuzungsdatenerfassung S1, Berechnung geometrischer Eigenschaften S2, Geschwindigkeitsplanung S3, Zeitplanung S4, Vergleich benötigte Zeit < verfügbare Zeit S5, falls die Prüfung nach S5 ein Ja Y ergibt, folgt Entscheidungspunkt erreicht - unbeschränkte Geschwindigkeitsplanung S6, sonst, bei Nein N folgt der Schritt Geschwindigkeitsreduktion (Haltepunkt) einplanen S7 und wieder S3. E ist das Ende des Verfahrens.

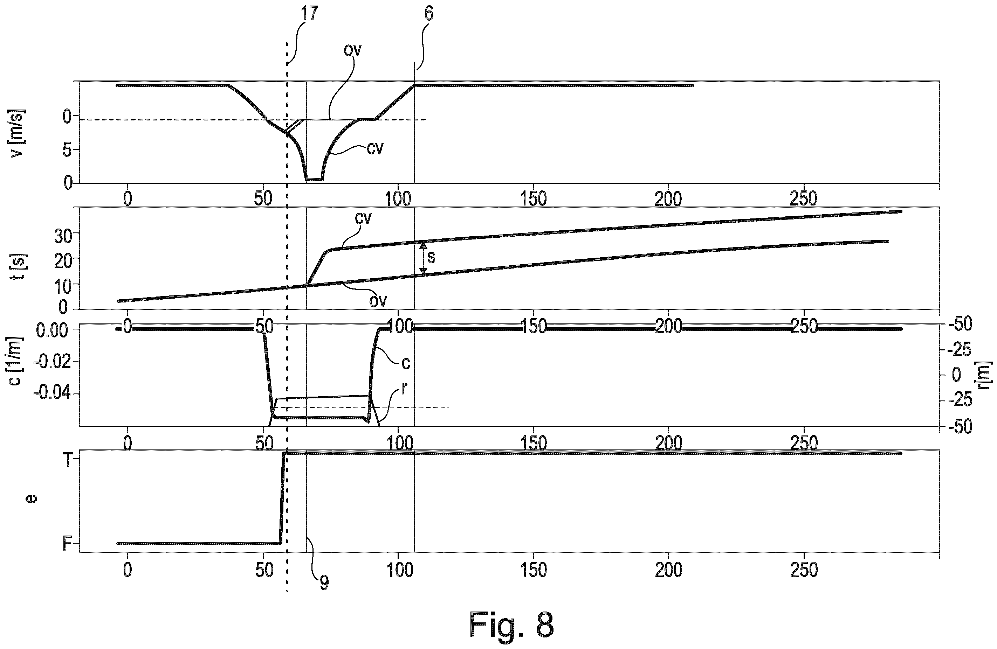

Fig. 8 zeigt schließlich das Ergebnis einer Anwendung eines erfindungsgemäßen Verfahrens auf eine 90-Grad-T-Kreuzung. Dargestellt sind von oben nach unten Streifen mit den Profilen von Geschwindigkeit v, Zeit t, Krümmung c, Radius r und Erlaubnis e zum Einfahren in die Kreuzung über die Strecke. Dargestellt ist der Entscheidungspunkt 17 als gestrichelte Linie. Das Ende des Abbiegemanövers und der erfindungsgemäßen Berechnung liegt am Zielbezugspunkt 6. Dabei sind in den Graphen zur Geschwindigkeit v und zur Zeit t sowohl ein konventioneller Wert cv, ohne Optimierung der Kurvenanfahrt, als auch ein erfindungsgemäß optimierter Wert ov dargestellt. Eine mit dem Verfahren eingesparte Zeit s ist ersichtlich.

Die Erfindung stellt somit einen neuartigen Ansatz dar, um eine sichere und menschenähnliche Geschwindigkeitskontrolle in Längsassistenzsystemen, wie einer adaptiven Geschwindigkeitsregelung (ACC) für Kraftfahrzeuge an ungeregelten Kreuzungen zu erreichen. Dabei können GPS-Kartendaten und fahrzeuginterne Sensoren verwendet werden, um die Kreuzungsgeometrie und geplante Manöver abzuleiten, geometrische Sichtbereiche unter Berücksichtigung der Kreuzungsgeometrie und möglicher Hindernisse zu berechnen, und eine vorausschauende Verlangsamung auf eine angemessene Geschwindigkeit, bis ein bestimmter "Entscheidungspunkt" erreicht ist, an dem der Sichtbereich für die Sensoren ausreicht, um andere Fahrzeuge zur Kollisionsvermeidung zu erkennen, geplant und durchgeführt werden. Dadurch kann das Ego-Kraftfahrzeug 1 seine Geschwindigkeit in die Kreuzung hinein beibehalten oder beschleunigen oder weniger als sonst üblich reduzieren und ein unnötiges konservatives Anhalten vermeiden, ohne den Querverkehr zu beeinträchtigen, die Fahrzeit des Ego-Fahrzeugs 1 und dessen Energieverbrauch zu verringern. Die Sicherheit wird durch eine angemessene Geschwindigkeitsauswahl erhöht und ein menschenähnliches Fahrverhalten realisiert.

Das Verfahren kann unter anderem eingesetzt werden für das Rechtsabbiegen und Linksabbiegen an T-Kreuzungen, sowie für das Rechtsabbiegen und Linksabbiegen an X-Kreuzungen, sowie beispielsweise beim Zusammenführen von Fahrspuren.

### Bezugszeichenliste

- 1: Kraftfahrzeug
- 2: Kreuzung
- 3: Umgebungssensor
- 4: Sichtfeld
- 5: Zielpfad
- 6: Zielbezugspunkt
- 7: Zielfahrbahn
- 8: Fremdfahrzeug
- 9: Kollisionspunkt
- 10: Gefahrenbereich
- 11: Hindernis
- 12: Haltepunkt
- 13: linker Erfassungswinkel
- 14: rechter Erfassungswinkel
- 15: Schwerpunkt
- 16: Tangenten
- 17: Entscheidungspunkt
- 18: Elektronischer Horizont, GPS Daten, API Daten
- 19: Aktualisierung Fahrzeugposition, elektronischer Horizont, ADAS Sensoren, Fahrzeugzustand
- 20: linke Straßenbegrenzung
- 21: rechte Straßenbegrenzung
- 22: Geschwindigkeitsbegrenzung

- b1, b2: Breite
- c: Krümmung
- cv: Konventioneller Wert
- d: Distanz
- e: Erlaubnis zum Einfahren
- E: Ende
- F: False
- ov: Optimierter Wert
- r, r1, r2: Radius
- s: Eingesparte Zeit
- S: Start
- T: True
- t: Zeit
- tₙ: benötigte Zeit
- tₐ: verfügbare Zeit
- v: Geschwindigkeit
- vₚ: Geschwindigkeitsplan

- P1: Zielpfadposition 0m
- P2: Zielpfadposition 30m
- P3: Zielpfadposition 68m, Kollisionspunkt
- P4: Zielpfadposition 100m

- S1: Kreuzungsdatenerfassung
- S2: Berechnung geometrischer Eigenschaften
- S3: Geschwindigkeitsplanung
- S4: Zeitplanung
- S5: Vergleich benötigte Zeit < verfügbare Zeit
- S6: Entscheidungspunkt erreicht - unbeschränkte Geschwindigkeitsplanung
- S7: Geschwindigkeitsreduktion (Haltepunkt) einplanen
- Y: Ja
- N: Nein

## Patentansprüche

1. Verfahren zur adaptiven Regelung der Geschwindigkeit eines Kraftfahrzeugs (1) bei Annäherung des Kraftfahrzeugs (1) an eine ungeregelte Kreuzung (2), wobei das Kraftfahrzeug (1) Umgebungssensoren (3) umfasst zur Erfassung von Umgebungsdaten des Kraftfahrzeugs, insbesondere ADAS-Sensoren,
**dadurch gekennzeichnet , dass** bei einer Annäherung des Kraftfahrzeugs (1) an die ungeregelte Kreuzung (2) Umgebungsdaten des Kraftfahrzeugs empfangen werden, dass auf Basis der Umgebungsdaten des Kraftfahrzeugs (1) und der aktuellen Position des Kraftfahrzeuges (1) eine geometrische Berechnung eines Sichtfeldes (4) der Umgebungssensoren (3) in Richtung zur ungeregelten Kreuzung (2) erfolgt, wobei abhängig vom Sichtfeld (4) und von einem vorgesehenen Zielpfad (5) des Kraftfahrzeugs (1) eine Berechnung eines Geschwindigkeitsplanes (vₚ) für das Kraftfahrzeug (1) auf dem vorgesehenen Zielpfad (5) erfolgt, wobei die Geschwindigkeit (v) des Kraftfahrzeugs (1) entsprechend des Geschwindigkeitsplanes (vₚ) geregelt wird.

2. Verfahren nach Anspruch 1,
**dadurch gekennzeichnet , dass** zusätzlich zu den Umgebungsdaten des Kraftfahrzeugs die mittels Umgebungssensoren (3) erfasst werden, Daten aus GPS-Systemen und/oder Daten aus elektronischen Horizont-Konzepten genutzt werden zur Berechnung des Geschwindigkeitsplanes (vₚ) für das Kraftfahrzeug (1) auf dem vorgesehenen Zielpfad (5).

3. Verfahren nach Anspruch 1 oder 2,
**dadurch gekennzeichnet , dass** ein Zielbezugspunkt (6) auf dem vorgesehenen Zielpfad (5) bestimmt wird, so dass am Zielbezugspunkt (6) das Kraftfahrzeug (1) die Annäherung an die ungeregelte Kreuzung (2) beendet hat und eine Standardgeschwindigkeit für das Befahren der Zielfahrbahn (7) einnehmen kann, wobei eine benötigte Zeit (tₙ) berechnet wird, die das Kraftfahrzeug (1) bei einer Bewegung entsprechend des Geschwindigkeitsplanes (vₚ) bis zum Erreichen des Zielbezugspunkts (6) benötigt.

4. Verfahren nach Anspruch 3,
**dadurch gekennzeichnet , dass** eine verfügbare Zeit (tₐ) berechnet wird, die ein Fremdfahrzeug (8), welches im Sichtfeld (4) der Umgebungssensoren (3) detektiert wurde oder welches außerhalb des Sichtfeldes (4) der Umgebungssensoren (3) liegt, bei einer Bewegung mit einer wahrscheinlichen Geschwindigkeit bis zum Erreichen des Zielbezugspunkts (6) benötigt.

5. Verfahren nach Anspruch 4,
**dadurch gekennzeichnet , dass** geprüft wird, ob die benötigte Zeit (tₙ) kleiner ist als die verfügbare Zeit (tₐ), wobei falls dies nicht der Fall ist, abhängig vom Sichtfeld (4) und von dem vorgesehenen Zielpfad (5) des Kraftfahrzeugs (1) eine erneute Berechnung eines Geschwindigkeitsplanes (vₚ) für das Kraftfahrzeug (1) auf dem vorgesehenen Zielpfad (5) mit einer reduzierten Geschwindigkeit (v) erfolgt.

6. Verfahren nach zumindest einem der vorhergehenden Ansprüche, **dadurch gekennzeichnet , dass** eine Berechnung eines Kollisionspunktes (9) erfolgt, wobei der Kollisionspunkt (9) eine Position des Kraftfahrzeuges (1) auf dem vorgesehenen Zielpfad (5) des Kraftfahrzeugs (1) beschreibt, bei der das Kraftfahrzeug (1) in einen Gefahrenbereich (10) einer möglichen Kollision mit einem kreuzenden Fremdfahrzeug (8) an der Kreuzung (2) eintritt.

7. Verfahren nach Anspruch 6,
**dadurch gekennzeichnet , dass** die reduzierte Geschwindigkeit (v) eine Minimalgeschwindigkeit am Kollisionspunkt (9) umfasst, beispielsweise einen Stillstand am Kollisionspunkt (9) oder eine Geschwindigkeit größer Null und kleiner 5 km/h.

8. Verfahren nach Anspruch 4,
**dadurch gekennzeichnet , dass** geprüft wird, ob die benötigte Zeit (tₙ) kleiner ist als die verfügbare Zeit (tₐ), wobei falls dies der Fall ist, die Geschwindigkeit (v) des Kraftfahrzeugs (1) entsprechend einer nicht durch ein Kollisionsrisiko reduzierten Standardgeschwindigkeit für das Befahren der Kreuzung (2) geregelt wird.

9. Verfahren nach zumindest einem der vorhergehenden Ansprüche, **dadurch gekennzeichnet , dass** abhängig vom Sichtfeld (4) und von dem vorgesehenen Zielpfad (5) des Kraftfahrzeugs (1) die Berechnung des Geschwindigkeitsplanes (vₚ) für das Kraftfahrzeug (1) auf dem vorgesehenen Zielpfad (5) mittels eines numerischen Optimierungsverfahrens erfolgt, wobei das Optimierungsverfahren bevorzugt eine Kostenfunktion für eine Effizienz- und/oder Zeitoptimierung verwendet.

10. Kraftfahrzeug umfassend ein im Kraftfahrzeug verbautes Steuergerät,
**dadurch gekennzeichnet , dass** das Steuergerät dazu eingerichtet ist, ein Verfahren nach zumindest einem der vorhergehenden Ansprüche auszuführen.
